# FASCICULE DE BREVET EUROPEEN

(11) **EP 2 432 655 B1**
(45) Date de publication et mention de la délivrance du brevet: **16.10.2019**
(21) Numéro de dépôt: 10728766.6
(22) Date de dépôt: 17.05.2010
(51) Int. Cl.: B60J 5/10

(54) **OUVRANT DE VEHICULE MUNI DE CHARNIERES**
BEWEGLICHE FAHRZEUGPLATTE MIT SCHARNIER
VEHICLE MOVABLE PANEL PROVIDED WITH HINGES

(30) Priorité: 18.05.2009 FR 0953283
(43) Date de publication de la demande: 28.03.2012
(73) Titulaire: Compagnie Plastic Omnium, 69007 Lyon (FR); PSA Automobiles SA, 78300 Poissy (FR)
(72) Inventeur: ROCHEBLAVE, Laurent, F-69100 Villeurbanne (FR); CHERON, Hugues, F-01800 Meximieux (FR); ROCHER, Joël, F-78114 Magny Les Hameaux (FR); MATHOU, Laurent, F-94220 Charenton Le Pont (FR); GUILLOTEAU, Rachel, F-78000 Versailles (FR)
(74) Mandataire: LLR
(86) Numéro de dépôt international: PCT/FR2010/050946
(87) Numéro de publication internationale: WO 2010/133792

(56) Documents cités:
- EP-A1- 1 803 597
- EP-A1- 1 927 453
- DE-A1- 19 702 543
- DE-A1- 19 728 546
- FR-A1- 2 863 210
- FR-A1- 2 922 859
- US-A1- 2009 108 611

## Description

La présente invention concerne un ouvrant de véhicule. Un ouvrant selon le préambule de la revendication 1 est connu de FR 2863210 A1.

Un ouvrant de véhicule comprend un corps d'ouvrant, formant un élément permettant d'obturer au moins partiellement une ouverture de la caisse. Le corps est déplaçable entre une position d'obturation de l'ouverture et une position de passage dans lequel on laisse libre l'accès à l'ouverture.

Le corps d'ouvrant est relié à la caisse du véhicule par une liaison pivot, généralement assurée par deux charnières. Chaque charnière comprend par définition un charnon, dit « fixe », solidaire de la caisse du véhicule et un charnon, dit « mobile », solidaire de l'ouvrant. Ces deux charnons comprennent chacun un canal, les deux canaux étant alignés et accueillent un même axe, agencé de sorte que chaque charnon peut pivoter indépendamment de l'autre relativement à l'axe. Les deux charnons forment donc deux parties de la charnières reliées par une liaison pivot.

Dans l'état de la technique, l'ouvrant est réalisé en matière plastique et est assemblé sur la caisse du véhicule de la façon suivante. Les charnons fixes et mobiles, réalisés en un matériau métallique et déjà assemblés, sont rapportés, par l'intermédiaire du charnon mobile, à une extrémité de l'ouvrant par vissage. L'ensemble est ensuite mis en place sur la caisse du véhicule par vissage du charnon fixe sur la caisse.

Un tel procédé d'assemblage est relativement complexe car il nécessite de multiples opérations d'assemblage sur la chaîne de montage finale. En outre, ce procédé d'assemblage peut nécessiter un réglage de la position relative des différentes pièces, notamment un réglage des charnières, dans le but d'obtenir un référencement correct des pièces les unes par rapport aux autres. De ce fait, le temps d'assemblage est assez long. En outre, pour effectuer de telles opérations, des outils assez coûteux sont généralement nécessaires.

L'invention vise à fournir un ouvrant de véhicule automobile permettant de simplifier le procédé d'assemblage de l'ouvrant sur la caisse du véhicule, et d'économiser des coûts relatifs à l'assemblage de l'ouvrant sur le véhicule.

Ce problème technique est résolu par les caractéristiques techniques de la revendication 1 et 7.

A cet effet, l'invention a pour objet un ouvrant de véhicule comportant :
- un corps d'ouvrant réalisé au moins partiellement en matière plastique ;
- au moins une partie d'une charnière apte à relier le corps d'ouvrant à une caisse du véhicule, la partie formant une seule pièce avec au moins un élément du corps d'ouvrant et constituant de préférence un charnon de la charnière.

Par « formant une seule pièce », on entend que la partie de charnière est solidaire de la partie de l'ouvrant sans pour cela que des moyens de fixation externes (par soudage, collage, vissage,etc.) soient nécessaires.

Ainsi, on peut simplifier l'étape de référencement des pièces les unes par rapport aux autres, le nombre de pièces distinctes étant moins important. Cela permet de diminuer le temps d'assemblage et le nombre d'outils utilisés pour la mise en référence de l'ouvrant et de la caisse. De ce fait, les coûts de fabrication du véhicule automobile sont réduits.

Dans un mode de réalisation préférentiel, la partie de charnière et l'élément du corps sont réalisés au moins partiellement en matière plastique, la partie de charnière étant venue de moulage avec l'élément.

De ce fait, le poids des charnières est en outre réduit grâce à l'invention. En effet, les charnières de l'état de la technique étant réalisées en acier et d'épaisseur relativement importantes, notamment pour les ouvrants tels que le capot ou la porte de coffre, remplacer l'acier par de la matière plastique permet d'économiser environ 30 à 50% du poids des charnières, ce qui est avantageux, en particulier dans une optique de diminution de la consommation du véhicule.

L'ouvrant selon l'invention peut être apte à être disposé sur la caisse du véhicule de sorte que le corps de l'ouvrant soit essentiellement horizontal. Cet ouvrant est notamment un capot ou une porte de coffre.

Dans ce cas, l'ouvrant et en particulier les charnières sont très sollicitées lors d'un choc à haute vitesse, du fait de l'orientation de l'ouvrant. On rappelle qu'un choc à haute vitesse est un choc du véhicule contre un obstacle se produisant à une vitesse supérieure à 15km/h, notamment 50 km/h. La rupture des charnières lors d'un tel choc est dangereuse car l'ouvrant est alors susceptible de se détacher de la caisse, de traverser le pare-brise et venir percuter les passagers situés à l'avant du véhicule.

La démarche des inventeurs à la base de l'invention est donc originale, car, dans l'état de la technique, les charnières sont généralement réalisées pour être très rigides et sont donc conçues en un matériau métallique et renforcées pour augmenter leur résistance aux chocs à haute vitesse. Dans ce contexte, utiliser des charnières au moins partiellement réalisées en matière plastique, comme cela peut être le cas des charnières selon l'invention, notamment lorsqu'elles sont venues de moulage avec le corps d'ouvrant, va à l'encontre de toutes les pratiques de l'homme du métier.

Les inventeurs à la base de l'invention se sont toutefois aperçus qu'en dimensionnant correctement l'ouvrant, et en particulier la partie de charnière de celui-ci, il est tout à fait possible de répondre au cahier des charges dicté par les normes de choc actuellement en vigueur avec un ouvrant comprenant une partie de charnières en matière plastique.

En outre, en cas de choc haute vitesse, les efforts sont d'autant mieux répartis que l'interface de recouvrement entre le corps d'ouvrant et la charnière est grande. Avec des charnières en matière plastique, on peut augmenter l'interface de recouvrement, ce qui n'est pas possible avec des charnières rapportées sur l'ouvrant (et ce, quelle que soit leur matière) car sous l'effet du choc, les efforts se concentrent aux points de liaison (vis, ...) c'est à dire dans des zones localisées, ce qui engendre des risques de déchirure de l'ouvrant ou des charnières par sur-contraintes aux points de liaison.

Dans ce mode de réalisation, il est préférable que le corps d'ouvrant comprenne une zone de pliure, apte à se plier lorsque l'ouvrant est soumis à un choc à haute vitesse, c'est à dire une force sensiblement dirigée selon la direction longitudinale du véhicule, la zone de pliure comprenant de préférence une zone de moindre épaisseur, s'étendant notamment sur toute une dimension et/ou selon une dimension transversale de l'ouvrant.

En effet, dans ce cas, ce ne sont pas les charnières qui subissent toutes les sollicitations engendrées par le choc à haute vitesse, le corps d'ouvrant absorbant une partie de ces sollicitations en se pliant. Cela diminue la résistance que doivent présenter les parties de charnière, notamment lorsqu'elles sont venues de moulage avec le corps de l'ouvrant, et facilite la conception de celui-ci. En outre, même lorsque la partie de charnière est conçue pour résister à elle-seule à un tel choc, cela évite que l'effort soit entièrement reporté sur les axes de liaison des charnières ou pivots, ceux-ci étant également susceptibles de se rompre et d'entraîner le détachement de l'ouvrant de la caisse.

Toutefois, si la présence d'une telle zone de pliure ou tout autre élément visant à réduire les sollicitations subies par les charnières en cas de choc à haute vitesse est préférentiel, elle n'est en aucun cas obligatoire, les parties de charnière étant aptes à remplir le cahier des charges du choc à haute vitesse à elles-seules, même dans le cas où elles sont réalisées en matière plastique.

Alternativement, l'ouvrant peut également être un hayon ou une portière latérale de véhicule.

L'invention peut également comprendre l'une ou plusieurs des caractéristiques de la liste suivante :
- le corps comprend une doublure d'ouvrant et une peau apte à recouvrir la doublure, la partie de charnière étant en une seule pièce avec un élément de la doublure, en particulier venue de moulage avec la doublure. On entend par « peau » un panneau de l'ouvrant visible de l'extérieur du véhicule lorsque l'ouvrant est monté sur le véhicule, et par « doublure » un panneau situé sous la peau de l'ouvrant,
- la partie de charnière comprend un réseau de nervures. Ce réseau de nervures a une fonction de rigidification de la charnière. Il peut par exemple comprendre un quadrillage de nervures, notamment perpendiculaires. Les nervures peuvent également être d'épaisseur supérieure ou égale à 2,5 mm ;
- si la partie de charnière est venue de moulage avec le corps d'ouvrant, la partie de charnière peut comprendre une zone fusible, apte à se rompre en cas de choc. L'avantage d'une telle zone fusible sur un ouvrant type capot, porte ou ouvrant arrière, est de pouvoir privilégier des zones de rupture pour conserver d'autres zones fonctionnelles lors d'un choc. Pour le cas du capot, la partie de charnière peut être conçue pour rompre localement si une tête de piéton percute la partie de charnière, la zone fusible étant de préférence formée par une zone d'épaisseur moindre ou une singularité géométrique de la partie de charnière. Une telle zone est plus particulièrement conformée pour être fusible lors d'un choc tête, lorsqu'une tête de piéton percute l'ouvrant, à savoir lorsqu'une force de direction essentiellement verticale et de norme supérieure à une valeur prédéterminée est appliquée sur le capot Un choc tête est un choc se produisant entre un ouvrant, notamment un capot, et la tête d'un piéton renversé par le véhicule. Comme les charnières sont généralement rigides, lorsque la tête d'un piéton impacte le capot en cet endroit, elle subit de graves lésions. Le fait que les charnières soient en matière plastique permet de les munir d'une zone fusible de conception simple, par exemple une zone d'épaisseur moindre. Cela est avantageux car les efforts exercés sur la tête du piéton se relâchent lorsque la zone fusible se rompt. De ce fait, les lésions de la tête du piéton sont moins importantes. Ces lésions sont également moins importantes que lorsque le capot heurte des charnières de l'état de la technique, même lorsque celles-ci sont conçues pour traiter un choc piéton. En effet, comme elles sont en métal, les charnières de l'état de la technique sont conçues au mieux pour flamber ou se déformer lors du choc tête mais pas pour rompre. De ce fait, la diminution des efforts exercés sur la tête du piéton est moins significative. En outre, pour éviter de blesser un piéton, sur certains capots du marché, la zone de liaison du capot et de la caisse, très raide, est positionnée en arrière du capot, proche du pare-brise de sorte qu'elle ne soit plus dans la zone à protéger pour la tête des piétons. La solution de la présente invention permet de ramener les éléments de charnière sous le capot tout en protégeant la tête des piétons. Cela permet en outre de diminuer la longueur des charnons, donc leur masse, mais aussi d'éviter d'avoir à réaliser des formes complexes allongées (col de cygne) qui dégradent la rigidité en torsion de l'ouvrant,
- optionnellement, l'ouvrant comprend une tresse de fibres, notamment de fibres de verres, ou une lame métallique, agencée de façon à maintenir attachées les différentes parties de l'ouvrant en cas de rupture de la zone fusible. La tresse peut notamment être surmoulée sur la partie de charnière. Ainsi, lorsqu'un choc tête se produit sur les charnières et que la zone fusible se rompt, cela évite que le capot se détache de la caisse.. Une telle tresse ou lame peut également être utilisée à titre de sécurité pour le traitement du choc à haute vitesse afin d'éviter que le capot se détache de la caisse et s'encastre dans l'habitacle du véhicule ou soit projeté à distance du véhicule, étant alors susceptible de blesser les occupants du véhicule ou des piétons. Une telle tresse ou lame peut donc être présente sur l'ouvrant même lorsque celui-ci ne comprend pas de zone fusible pour le traitement du choc tête,
- la partie de charnière étant une première partie de charnière, l'ouvrant comprend une deuxième partie de charnière rapportée sur la première partie, la deuxième partie formant de préférence un charnon de la charnière rapporté sur la première partie de façon à être mobile relativement à celle-ci. De cette façon, toute la charnière est mise en place sur l'ouvrant avant l'assemblage de l'ouvrant sur la caisse au niveau de la chaîne d'assemblage, ce qui permet d'économiser des coûts de fabrication du fait du nombre réduit d'éléments à monter. Par ailleurs, en réduisant le maillon d'assemblage entre l'ouvrant et l'élément de charnière, on améliore la géométrie des assemblages étant donné que leur positionnement relatif est fait dans le moule. Le capot est enfin monté sur caisse par vissage du charnon fixe de charnière ce qui permet de conserver le réglage habituel de la position du capot par rapport à la caisse. Les jeux entre le capot et les ailes sont améliorés par rapport à l'existant car ils sont directement maîtrisés par cet unique vissage contrairement à une combinaison de 2 vissages habituellement. Optionnellement, la deuxième partie est réalisée au moins partiellement en matière plastique. Cela est particulièrement avantageux car cela permet de diminuer encore plus le poids du véhicule,
- le corps d'ouvrant et la partie de charnière sont réalisés au moins partiellement en un matériau thermoplastique, tel que le polyamide ou le polypropylène, ou en un matériau thermodurcissable, l'un ou l'autre de ces matériaux étant de préférence chargé de renforts, notamment de : fibres de verre, de carbone, ou de nano-charges.
- la partie de charnière est réalisée au moins partiellement en un matériau métallique et comprend de préférence au moins une plaque métallique, notamment surmoulée.

L'invention a également pour objet un ensemble d'un ouvrant et d'une caisse de véhicule, caractérisé en ce l'ouvrant comporte :
- un corps d'ouvrant réalisé au moins partiellement en matière plastique ;
- au moins une partie d'une charnière apte à relier cet ouvrant à une caisse du véhicule, la partie étant d'une seule pièce avec au moins un élément du corps d'ouvrant,
l'ouvrant étant de préférence apte à être disposé sur la caisse du véhicule de sorte que le corps de l'ouvrant soit essentiellement horizontal.

L'invention a également pour objet un procédé de fabrication d'un ouvrant de véhicule, caractérisé en ce qu'on moule au moins un élément d'un corps de l'ouvrant avec une partie d'une charnière apte à relier cet ouvrant à la caisse du véhicule, le procédé comprenant optionnellement une étape préalable de mise en place d'au moins un élément de renfort, notamment un élément métallique ouune tresse de fibres de verre, dans une zone du moule apte à former la partie de charnière.

L'invention sera mieux comprise à la lecture de la description qui va suivre, donnée uniquement à titre d'exemple et faite en se référant aux dessins dans lesquels :
- la figure 1 représente une vue en perspective d'une partie arrière d'un capot formant un ouvrant selon un premier mode de réalisation de l'invention,
- les figures 2A et 2B représentent des vues en perspective d'un hayon arrière et d'un détail de la partie supérieure de celui-ci, le hayon formant un ouvrant selon un deuxième mode de réalisation de l'invention,
- la figure 3 est une vue en coupe selon A-A du hayon selon la figure 2B,
- les figures 4A et 4B représentent des vues en perspective d'un hayon arrière et d'un détail de la partie supérieure de celui-ci, le hayon formant un ouvrant selon un troisième mode de réalisation de l'invention,
- la figure 5 est une vue en perspective d'une partie de charnière d'un ouvrant selon le mode de réalisation des figures 4A et 4B;
- la figure 6 est une vue en perspective d'un renfort apte à être mis en place sur un hayon tel que celui de la figure 4A.
- la figure 7 est une vue en perspective d'une porte de coffre formant un ouvrant selon un autre mode de réalisation de l'invention.

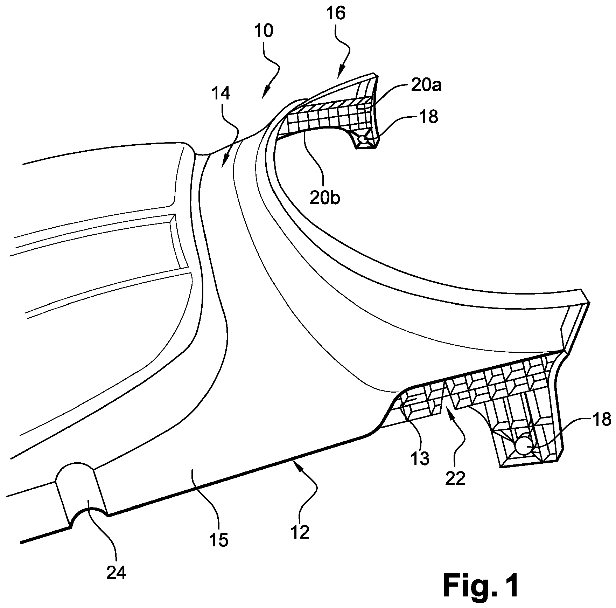

On a représenté sur la figure 1 un capot 10 selon un mode de réalisation de l'invention. La face inférieure 12 du capot, qui est tournée vers le compartiment moteur, est celle que l'on aperçoit sur la figure 1.

Le capot 10 est réalisé en matière plastique, notamment en un matériau thermoplastique tel que le polyamide ou le polypropylène, de préférence renforcé de fibres de verre, et comprend un insert 13 métallique pour la rigidification du capot sur lequel la matière plastique est surmoulée. Cet insert est représenté grisé sur la figure 1 et est visible uniquement à l'extrémité du capot mais s'étend sur toute la largeur du capot, au moins en partie arrière de celui-ci.

Le capot comprend un corps d'ouvrant 14 destiné à recouvrir le compartiment moteur. Le corps d'ouvrant 14 est formé par une doublure du capot 15, tournée vers le compartiment moteur de celui-ci et est destinée à être recouverte pas une peau de capot (non représentée sur les figures) formant une pièce d'aspect du véhicule visible depuis l'extérieur.

A l'arrière du capot, à chaque extrémité latérale de celui-ci, le capot comprend une partie de charnière 16, formant plus particulièrement un charnon, dit charnon mobile, d'une charnière reliant le capot à la caisse du véhicule. Les charnons 16 sont réalisés en matière plastique et sont venus de moulage avec le corps de l'ouvrant 14.

Chaque charnon 16 est conformé en L et fait saillie vers l'arrière relativement au corps du capot. Il comprend à son extrémité un orifice 18, cet orifice étant apte à accueillir un axe par l'intermédiaire duquel le charnon 16 est relié à un autre charnon, dit charnon fixe, de la charnière, non représenté sur les figures et pouvant être réalisé en un matériau plastique ou métallique, ce charnon étant également rapporté sur la caisse du véhicule. Le charnon fixe peut être rapporté sur le capot préférentiellement avant voire pendant l'assemblage du capot avec la caisse du véhicule.

Les charnons 16 du capot sont réalisés à l'aide d'un réseau de nervures 20a, 20b, notamment d'un quadrillage de nervures perpendiculaires formant des alvéoles, les nervures étant d'épaisseur supérieure ou égale à 2,5 mm. Ces nervures permettent de rigidifier le charnon 16, de sorte que celui-ci peut ainsi résister à un choc à haute vitesse. L'insert métallique de renfort du capot est intégré à une des nervures du réseau 20.

Le charnon 16 comprend également une singularité géométrique 22. Il s'agit d'une zone très localisée comprenant moins de nervures avec éventuellement une zone de sous-épaisseur, et donc de rigidité moindre relativement au reste du charnon 16. Cette zone 22 est prévue pour éviter de blesser un piéton dont la tête heurterait le capot au niveau du charnon 16. En effet, il s'agit d'une zone apte à se rompre en cas d'un tel choc, c'est à dire lorsque qu'elle subit une force essentiellement verticale et vers le bas. Grâce à cette zone, les efforts subis par la tête du piéton dans le cas où il heurte le charnon diminuent. Sur la figure 1, la zone 22 est représentée après rupture.

L'insert métallique 13, traverse la zone de rupture. Il permet de maintenir solidaire les différents éléments du capot en cas de dislocation du charnon à la suite à un choc à haute vitesse ou à un choc tête.

Le capot comprend également une zone de pliure 24, une telle zone s'étendant sur toute la dimension transversale du véhicule. En cas de choc à haute vitesse, qui engendre une force dirigée selon la direction longitudinale du véhicule, une telle zone se plie et, de ce fait, les efforts que subissent les charnières sont diminués.

Un tel capot intégrant une partie des charnières permet de diminuer les coûts de fabrication du véhicule, notamment les coûts d'assemblage du capot sur la caisse du véhicule, tout en résistant à un choc à haute vitesse.

L'insert métallique décrit dans l'exemple ci-dessus est optionnel. En outre, le capot peut comprendre deux inserts localisés à chaque extrémité latérale du capot, au niveau des charnières ou être remplacé par une tresse de fibres.

Le capot peut également être en une seule pièce et ne pas comporter une doublure et une peau.

En outre, on notera que la forme du charnon n'est pas limitée à ce qui est décrit. Un tel charnon peut ne pas comprendre de nervures, et/ou ne pas être conformé en L. Les nervures pourraient également être d'épaisseur ou d'inclinaison différente. Le nombre de nervures dans le réseau est également variable.

La zone de rupture en cas de choc tête est également optionnelle ou peut être conformée d'une autre façon, par exemple par une zone de moindre épaisseur dans les nervures.

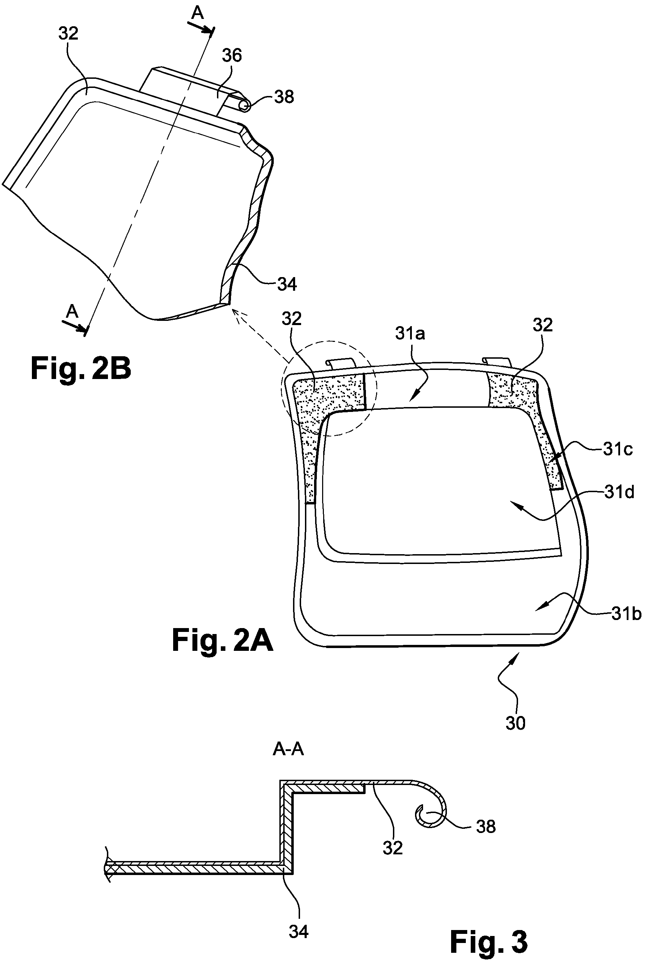

On a représenté sur les figures 2A, 2B et 3 un caisson de hayon 30 de véhicule selon un mode de réalisation de l'invention.

Ce caisson de hayon 30 forme un hayon de véhicule en combinaison avec une peau, destinée à recouvrir le hayon. Cette peau est une pièce d'aspect destinée à être visible depuis l'extérieur du véhicule.

Il comprend une partie supérieure 31a et une partie inférieure 31b, reliées par deux montants 31c, entre lesquels est ménagée une ouverture 31d, apte à accueillir une vitre arrière.

Le caisson est réalisé en un matériau thermoplastique 34, notamment en polyamide ou en polypropylène et comprend au niveau de l'extrémité latérale de sa partie supérieure 31a et du montant correspondant un élément métallique 32, réalisé en aluminium ou en acier et surmoulé sur sa face destinée à être tournée vers l'intérieur du véhicule par la matière plastique, comme on le voit plus particulièrement sur la figure 3.

L'élément métallique 32 forme un élément de renfort du caisson et comprend à son extrémité supérieure, deux parties de charnières 36, formant charnon mobile d'une charnière apte à relier le hayon à la caisse du véhicule. Dans sa partie 36 formant charnon mobile, le renfort 32 n'est pas surmoulé par de la matière plastique.

Le charnon 36 est formé par une languette métallique, par exemple en acier ou en aluminium, conformée dans la feuille métallique formant le renfort 32. Il s'étend en saillie de l'extrémité supérieure du renfort 32, notamment de la partie de celui-ci formant la partie supérieure 31a du caisson 30. La languette est enroulée sur elle-même à son extrémité libre de façon à former une cavité 38, cette cavité étant apte à accueillir un axe de liaison de la charnière. Cet axe est également solidaire d'un charnon fixe de la charnière (non représenté sur les figures) et permet de former une liaison pivot entre les charnons mobile 36 et fixe correspondant.

En variante, le renfort 32 peut par exemple former la totalité du caisson, par exemple ou être de forme totalement différente de celle décrite ci-dessus. Les charnons mobiles 36 peuvent également prendre toute autre forme que celle décrite. La forme du caisson de hayon n'est pas non plus limitée à ce qui a été décrit plus haut. Par exemple, la matière thermoplastique pourrait être surmoulée sur le renfort, notamment en partie supérieure du caisson, pour former, en saillie de la face de celui-ci tournée vers l'extérieur, des nervures.

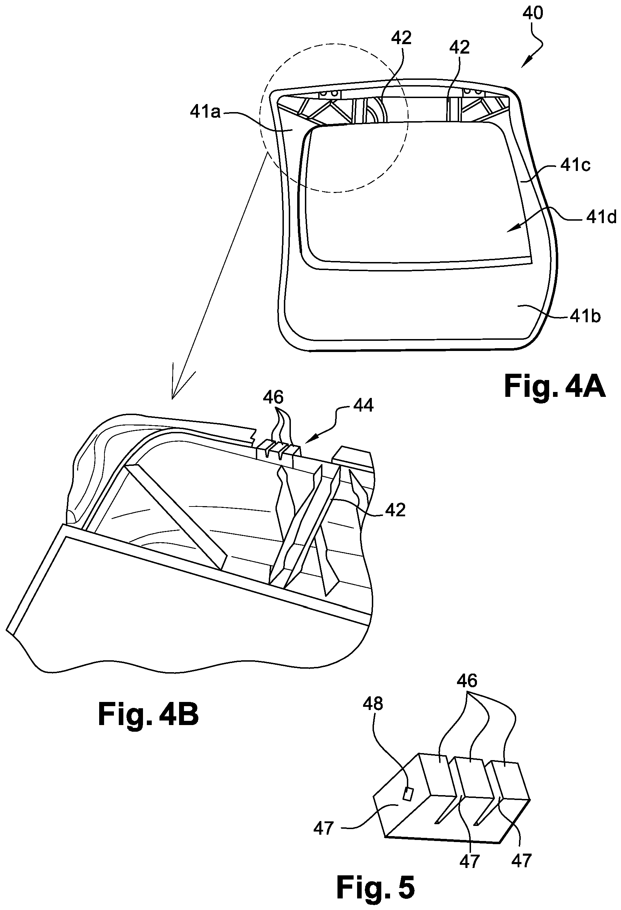

On va maintenant décrire en référence aux figures 4A et 4B un caisson de hayon 40 selon un autre mode de réalisation de l'invention.

Excepté dans la zone des charnières, le caisson a la même forme générale que le caisson 30 décrit précédemment et comprend une partie supérieure 41a et une partie inférieure 41b reliées par deux montants 41c entre lesquels s'étendant une ouverture 41d.

Dans ce mode de réalisation, le caisson est réalisé en matière plastique, notamment thermoplastique, telle que du polyamide ou du polypropylène, et est formé par moulage sans renforts structurels permettant la rigidification globale du hayon. Il peut toutefois comprendre des renforts métalliques locaux sur lesquels la matière plastique est surmoulée. Le hayon est réalisé de sorte que la matière thermoplastique forme des nervures 42 de rigidification dans la partie supérieure 41a de celui-ci, en saillie de la face du caisson destinée à être tournée vers l'extérieur du véhicule.

A l'extrémité supérieure de la partie supérieure 41a, le caisson 40 comprend deux éléments 44 formant chacun un charnon d'une charnière apte à relier le caisson à la caisse du véhicule. Ces deux charnons sont formés sur la face du caisson destiné à être tourné vers l'intérieur du véhicule, en saillie du reste du caisson vers l'intérieur du véhicule.

Ces charnons 44 sont venus de moulage avec le caisson et sont moulés en même temps que le reste de celui-ci. Comme on le voit sur la figure 5, chaque charnon 44 est constitué de trois plots creux 46 s'étendant vers l'intérieur du véhicule. Chaque plot comprend deux parois latérales 47, chacune percée en son centre pour former des orifices 48 en vis-à-vis. De cette façon, le charnon mobile 44 peut accueillir un axe de liaison, celui-ci étant destiné à être inséré dans les orifices du charnon mobile et dans des orifices en vis-à-vis d'un charnon fixe (non représenté). Le charnon fixe est par exemple conformé pour comprendre des parois destinées à s'insérer entre les plots 46 du charnon mobile 44.

Le charnon mobile peut comprendre des parois d'épaisseur supérieure au reste du caisson moulé ou un renfort métallique placé par exemple sur la face interne de chacun des plots 46. Cela permet d'augmenter sa rigidité au vu des efforts auxquels il est soumis relativement au reste du caisson.

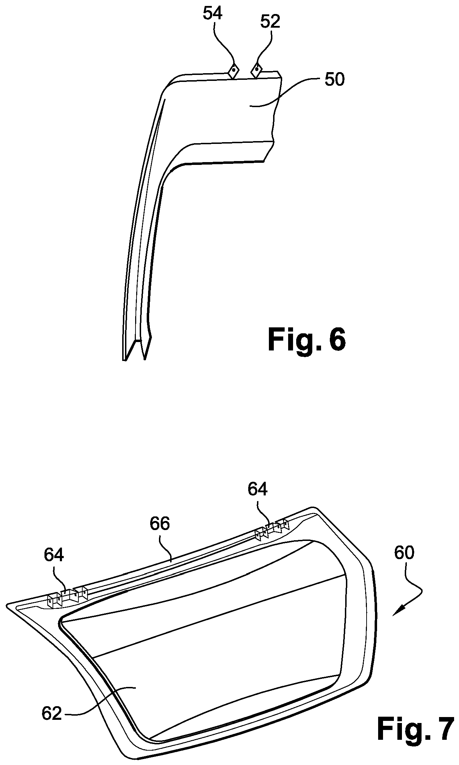

En variante et comme représenté sur la figure 6, le caisson de hayon peut comprendre un insert surmoulé 50 recouvrant tout ou partie du caisson, pour rigidifier le caisson. Cet insert comprend à son extrémité supérieure, deux languettes 52 en saillie du hayon. Chacune des languettes est percée en son centre par un orifice 54.

Dans ce cas, une charnière telle que celle de la figure 5 est surmoulée sur l'insert de sorte que les languettes 54 forme un renfort des faces latérales extérieures de la charnière.

On va enfin décrire un ouvrant selon un autre mode de réalisation. Une porte de coffre 60 est représentée sur la figure 7. On voit sur la figure la face supérieure d'une doublure 62 de la porte de coffre. Cette doublure est destinée à être recouverte par une peau non représentée sur la figure. Elle est réalisée en un matériau thermoplastique et comprend à son extrémité avant une partie de charnière 64 formant un charnon mobile d'une telle charnière, apte à relier l'ouvrant et la caisse du véhicule, ce charnon étant venu de moulage avec la doublure de la porte de coffre. Le charnon 64 est conformé comme celui décrit à la figure 5. Il est placé sur une paroi verticale de la doublure 66 située à une extrémité avant de la porte de coffre et fait saillie vers l'avant du véhicule lorsque que la porte de coffre est montée sur le véhicule.

Bien entendu, l'invention n'est pas limitée aux modes de réalisation précédemment décrits. N'importe quel ouvrant (capot, hayon, portière, porte de coffre) peut comprendre une partie de charnière conformée selon l'un ou l'autre des modes de réalisations décrits dans l'invention. Par exemple, une porte de coffre peut comprendre des charnières telles que celles du mode de réalisation de la figure 1.

Les matériaux auxquels s'appliquent l'invention ne sont pas non plus limités aux matériaux décrits ci-dessus. Le corps d'ouvrant peut par exemple être réalisé en matière thermodurcissable, tel que du SMC (Sheet Moulding Compound). Ces matériaux peuvent également être renforcés ou chargés à l'aide de tout additif.

On peut également envisager de renforcer davantage la partie de charnière que le corps d'ouvrant, par exemple en prévoyant dans cette zone une orientation des fibres différente ou en augmentant le taux de fibres dans cette zone.

L'ouvrant peut également comprendre un ou plusieurs inserts de toute forme ou en être dépourvu, l'invention pouvant être réalisée indépendamment de la présence d'un tel insert.

## Revendications

1. Ouvrant (10 ; 30 ; 40 ; 60) de véhicule comprenant:
- un corps d'ouvrant (14 ;30 ;40 ;60) réalisé au moins partiellement en matière plastique ;
- au moins une partie (16 ; 36 ; 46 ; 64) d'une charnière apte à relier le corps d'ouvrant à une caisse du véhicule, la partie étant en une seule pièce avec un élément (14 ; 32 ; 41a ; 62) du corps d'ouvrant en étant solidaire de l'élément du corps d'ouvrant sans pour cela que des moyens de fixation externes soient nécessaires, la partie de la charnière constituant de préférence un charnon de la charnière,
le corps d'ouvrant (14 ;30 ;40 ;60) comprenant une doublure d'ouvrant (15) et une peau apte à recouvrir la doublure, la partie (16 ; 36 ; 46 ; 64) de charnière étant en une seule pièce avec un élément de la doublure, l'élément de la doublure et la partie (16 ; 36 ; 46 ; 64) de charnière étant réalisés au moins partiellement en matière plastique, la partie (16 ; 36 ; 46 ; 64) de charnière étant venue de moulage avec l'élément,
l'ouvrant étant **caractérisé en ce que** la partie (16 ; 36 ; 46 ; 64) de charnière comprend une zone fusible (22), apte à se rompre en cas de choc, la zone fusible (22) étant de préférence formée par une zone d'épaisseur moindre ou une singularité géométrique de la partie (16 ; 36 ; 46 ; 64) de charnière.

2. Ouvrant selon la revendication 1, constitué par un capot (10) ou une porte de coffre (60).

3. Ouvrant selon l'une quelconque des revendications précédentes, dans lequel le corps d'ouvrant comprend une zone de pliure (24) apte à se plier lorsque l'ouvrant est soumis à un choc à haute vitesse, la zone de pliure comprenant de préférence une zone de moindre épaisseur, s'étendant notamment sur toute une dimension et/ou selon une dimension transversale de l'ouvrant.

4. Ouvrant selon l'une quelconque des revendications 1 à 3, dans lequel le corps d'ouvrant et la partie de charnière sont réalisés au moins partiellement en un matériau thermoplastique, tel que le polyamide ou le polypropylène, ou en un matériau thermodurcissable, l'un ou l'autre de ces matériaux étant de préférence chargé de renforts : fibres de verre, carbone, nano-charges.

5. Ouvrant selon l'une quelconque des revendications précédentes, dans lequel la partie de charnière comprend un réseau de nervures (20).

6. Ouvrant selon l'une quelconque des revendications précédentes, dans lequel la partie de charnière comprend de préférence au moins une plaque ou une tresse métallique (13 ; 32 ; 54) ou de fibres de verre, notamment surmoulée.

7. Procédé de fabrication d'un ouvrant de véhicule selon l'une quelconque des revendications précédentes, **caractérisé en ce qu'**on moule au moins un élément d'un corps de l'ouvrant avec une partie d'une charnière apte à relier cet ouvrant à la caisse du véhicule, le procédé comprenant optionnellement une étape préalable de mise en place d'au moins un élément de renfort, notamment métallique ou en fibres de verre, dans une zone du moule apte à former la partie de charnière.

## Patentansprüche

1. Öffnungselement (10; 30; 40; 60) für Fahrzeug, umfassend:
- einen Öffnungselementkörper (14; 30; 40; 60), der mindestens teilweise aus Kunststoff ist;
- mindestens einen Teil (16; 36; 46; 64) eines Gelenks zum Verbinden des Öffnungselementkörpers mit einer Karosserie des Fahrzeugs; wobei der Teil einstückig mit einem Element (14; 32; 41a; 62) des Öffnungselementkörpers ist, indem er mit dem Öffnungselementkörper fest verbunden ist, ohne dass hierfür externe Befestigungsmittel notwendig sind, wobei der Teil des Gelenks vorzugsweise ein Scharnierteils des Gelenks bildet,
wobei der Öffnungselementkörper (14; 30; 40; 60) eine Öffnungselementauskleidung (15) und eine Haut zum Bedecken der die Auskleidung umfasst, wobei der Teil (16; 36; 46; 64) des Gelenks einstückig mit einem Element der Auskleidung ist, wobei das Element der Auskleidung und der Teil (16; 36; 46; 64) des Gelenks mindestens teilweise aus Kunststoff sind, wobei der Teil (16; 36; 46; 64) des Gelenks an das Element angeformt ist,
wobei das Öffnungselement **dadurch gekennzeichnet ist, dass** der Teil (16; 36; 46; 64) des Gelenks eine Sollbruchzone (22) umfasst, die im Fall eines Aufpralls brechen kann, wobei die Sollbruchzone (22) vorzugsweise von einer Zone mit geringerer Dicke oder einer geometrischen Singularität des Teils (16; 36; 46; 64) des Gelenks gebildet ist.

2. Öffnungselement nach Anspruch 1, das von einer Motorhaube (10) oder einer Kofferraumtür (60) gebildet ist.

3. Öffnungselement nach einem der vorhergehenden Ansprüche, wobei der Öffnungselementkörper eine Knickzone (24) umfasst, die knicken kann, wenn das Öffnungselement einem Aufprall bei hoher Geschwindigkeit ausgesetzt ist, wobei die Knickzone vorzugsweise eine Zone geringerer Dicke umfasst, die sich insbesondere über eine gesamte Ausdehnung und/oder gemäß einer Querausdehnung des Öffnungselements erstreckt.

4. Öffnungselement nach einem der Ansprüche 1 bis 3, wobei der Öffnungselementkörper und der Teil des Gelenks mindestens teilweise aus einem thermoplastischen Material sind, wie Polyamid oder Polypropylen, oder aus einem duroplastischen Material, wobei das eine oder das andere dieser Materialien vorzugsweise mit Verstärkungen gefüllt ist: Glasfaser, Kohlenstoff, Nanofüllstoffe.

5. Öffnungselement nach einem der vorhergehenden Ansprüche, wobei der Teil des Gelenks ein Netz von Rippen (20) umfasst.

6. Öffnungselement nach einem der vorhergehenden Ansprüche, wobei der Teil des Gelenks vorzugsweise eine Platte oder ein Geflecht (13; 32; 54) aus Metall oder aus Glasfasern umfasst, die bzw. das insbesondere aufgeformt ist.

7. Verfahren zum Herstellen eines Öffnungselement für Fahrzeug nach einem der vorhergehenden Ansprüche, **dadurch gekennzeichnet, dass** mindestens ein Element eines Körpers des Öffnungselements mit einem Teil eines Gelenks zum Verbinden dieses Öffnungselements mit der Karosserie des Fahrzeugs geformt wird, wobei das Verfahren optional einen vorherigen Schritt des Einsetzens mindestens eines Verstärkungselements, insbesondere aus Metall oder aus Glasfasern, in einer Zone des Formwerkzeugs zum Bilden des Teils des Gelenks umfasst.

## Claims

1. Vehicle movable panel (10; 30; 40; 60) comprising:
- a movable panel body (14; 30; 40; 60) made at least partially of a plastic material;
- at least a portion (16; 36; 46; 64) of a hinge adapted to connect the movable panel body to the vehicle body, the portion being made in one piece with an element (14; 32; 41a; 62) of the movable panel body being attached to the element of the movable panel body without the need for external attachment means, the hinge portion preferably forming a knuckle of the hinge,
the movable panel body (14; 30; 40; 60) comprising a movable panel lining (15) and a skin adapted to cover the lining, the hinge portion (16; 36; 46; 64) being made in one piece with an element of the lining, the element of the lining and the hinge portion (16; 36; 46; 64) being made at least partially of a plastic material, the hinge portion (16; 36; 46; 64) being moulded with the element, the movable panel being **characterised in that** the hinge portion (16; 36; 46; 64) comprises a fusible area (22), adapted to break in case of impact, the fusible area (22) preferably being formed by an area of lower thickness or a geometrical singularity of the hinge portion (16; 36; 46; 64).

2. Movable panel according to claim 1, consisting of a bonnet (10) or a boot door (60).

3. Movable panel according to any one of the preceding claims, wherein the movable panel body comprises a bending area (24) adapted to bend when the opening panel is subjected to a high-speed impact, the bending area preferably comprising an area of lower thickness extending in particular over an entire dimension and/or along a transverse dimension of the movable panel.

4. Movable panel according to any one of claims 1 to 3, wherein the movable panel body and the hinge portion are made at least partially of a thermoplastic material, such as polyamide or polypropylene, or of a thermosetting material, one of these materials preferably being loaded with reinforcements: glass or carbon fibres, nano-fillers.

5. Movable panel according to any one of the preceding claims, wherein the hinge portion comprises a network of ribs (20).

6. Movable panel according to any one of the preceding claims, wherein the hinge portion preferably comprises at least a plate or a braid (13; 32; 54) made of metal or glass fibres, in particular overmoulded.

7. Method of manufacturing a vehicle movable panel according to any one of the preceding claims, **characterised in that** at least one element of the movable panel body is moulded with a portion of a hinge adapted to connect this movable panel to the vehicle body, the method optionally comprising a preliminary step of fitting at least one reinforcement element, in particular made of metal or glass fibres, in an area of the mould adapted to form the hinge portion.
